(19) Europäisches Patentamt
European Patent Office
Office européen des brevets

(11) EP 2 042 359 A1

(12) EUROPEAN PATENT APPLICATION

(43) Date of publication:
01.04.2009 Bulletin 2009/14

(51) Int Cl.:
B60H 3/06 (2006.01)     B01D 46/52 (2006.01)

(21) Application number: 08164743.0

(22) Date of filing: 19.09.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 28.09.2007 JP 2007256384

(71) Applicant: VALEO SYSTEMES THERMIQUES
78321 Le Mesnil St Denis Cedex (FR)

(72) Inventor: Aoki, Yoshie
78321, Le Mesnil Saint Denis (FR)

(74) Representative: Léveillé, Christophe
Valeo Systemes Thermiques
8, rue Louis Lormand
La Verrière BP 513
78321 Le Mesnil-Saint- Denis Cedex (FR)

(54) **Filter device and motor-vehicle air-conditioning system which employs the same**

(57)     [Problem] The aim of the present invention is therefore to provide a filter device for a motor-vehicle air-conditioning system with which increases in resistance to the passage of air are suppressed over prolonged periods, and also the device is easy to handle in the production process as the filtering medium for the filter device can still expand and contract after it has been folded.

[Resolving Means] The inventive filter device for a motor-vehicle air-conditioning system is characterized in that a filtering medium 100 has folds comprising a first group of lines, in which zigzag mountain fold lines 1a and valley fold lines 1b are alternately repeated in the Y direction with spaces between them, and a second group of lines 3 in which linear folds running in the Y direction and comprising alternately repeating mountain fold 3a and valley fold 3b sections are arranged parallel to one another; and the second group of lines 3 is intersected at each apex of the zigzag shape of the first group of lines, the mountain fold 3a and valley fold 3b sections of the second group of lines 3 alternate at the point of intersection, and furthermore the mountain folds and valley folds alternate so that adjacent folds of the second group of lines which are split by each fold of the first group of lines are opposing folds.

Figure 2

EP 2 042 359 A1

**Description**

The present invention relates to a filter device installed in a motor-vehicle air-conditioning system in which resistance to the passage of air does not readily increase even if dust collects, and to a motor-vehicle air-conditioning system which employs the same.

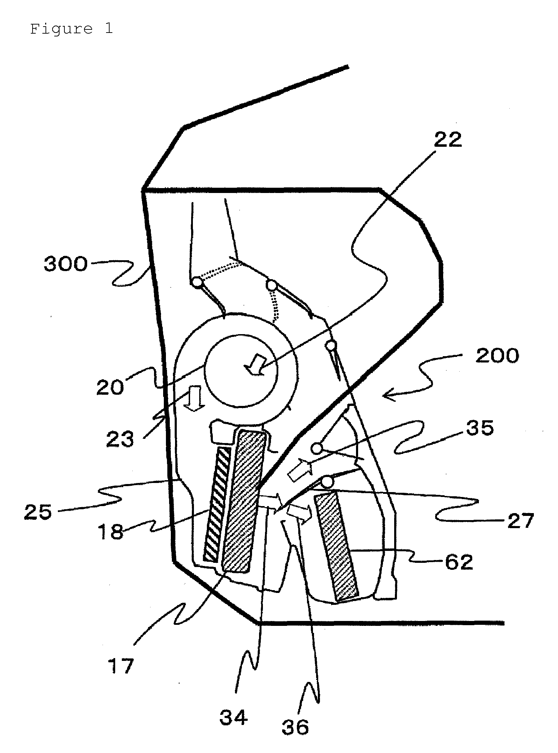

In recent years, the number of motor-vehicle air-conditioning systems in which a motor-vehicle cabin filter (also referred to below as a filter device) is installed has increased. Figure 1 is a schematic showing the position where a filter device is fitted in a motor-vehicle air-conditioning system. A filter device 18 collects detritus and pollen etc. from outside the vehicle compartment, and can also collect detritus and allergenic matter etc. inside the vehicle compartment, and there are also systems which include anti-allergenic, deodorizing or other functions.

Filter devices which are installed in motor-vehicle air-conditioning systems comprise a filtering medium which is folded into zigzags so as to increase the filtering area, in order to delay the deterioration over time of the performance in terms of reducing resistance to the passage of air and dust collection. There is currently only one way of folding the filtering medium in filter devices for motor-vehicle air-conditioning systems which involves what are known as pleat folds, in which a pleated shape is produced with alternating repetitions of linear mountain folds and valley folds spaced equally in one direction.

With pleat folds, however, the shape of the filtering medium may readily collapse when there is a large amount of air, and if dust collects and accumulates in a certain part of a valley fold, there may be a localized increase in resistance to the passage of air, with the pleated portion which forms that valley fold opening outwards and ultimately compressing the adjacent pleat, so that regions where filtering is not applied are formed. As a result, there are problems in that resistance to the passage of air in the filter device as a whole is likely to increase, and the lifespan of the filter device is shortened. Consequently, there is a requirement for this resistance to the passage of air to be made so that it does not readily rise, in order to maintain the performance of the filter device over prolonged periods, and to reduce the frequency with which the filter device is replaced.

Ribbon processing in which the areas between the apexes of the pleats are linked using adhesive to make the gaps between the apexes of the pleats less likely to change is conventionally carried out as a method of making adjacent pleats less likely to come into contact with one another, and of restricting the formation of regions where filtering is not applied. Furthermore, an invention has been proposed in which folds bending back and forth in fixed directions are added to the pleats in order to prevent deformation of the pleats (see Patent Document 1, for example). In addition, a structure has been proposed comprising a combination of parallel linear folds which intersect inclined folds, and the flat plane is bent into folds to give a rigid and solid shape (see Patent Document 2, for example).

Meanwhile, a technique known as the Miura map fold (registered trade mark) has been proposed as a technique for folding sheets such as maps into layers, but this is limited to uses for folding flat shapes into layers (see Patent Document 3, for example).

[Patent Document 1] Japanese Unexamined Patent Application Publication H10-15329
[Patent Document 2] Japanese Unexamined Patent Application Publication H2-301426
[Patent Document 3] Japanese Examined Utility Model Registration Publication S56-25023

However there are problems with ribbon processing in that it takes time for the adhesive to dry, and therefore productivity is reduced, and there are also problems in that resistance to the passage of air is increased if there are a lot of places where ribbon processing is carried out, and therefore there are limited places where ribbon processing is carried out, and it is not possible to restrict deformation of all of the pleats. Furthermore, the technique disclosed in Patent Document 1 has an effect on absorption of the dimensions when the outer peripheral frame of the filter device contracts, and it is not possible to prevent compression of adjacent pleats due to localized increases in resistance to the passage of air, which causes dust to collect. In addition, there are problems with the technique disclosed in Patent Document 2 in that the way of folding is complex and there is no foldability, which makes handling during the production process difficult, and in addition deformation cannot be flexibly absorbed when the outer peripheral frame of the filter device contracts.

The aim of the present invention is therefore to provide a filter device for a motor-vehicle air-conditioning system, and with said filter device the formation of regions where no filtering is applied is suppressed, even if dust collects, increases in resistance to the passage of air are suppressed over prolonged periods, and also the device is easy to handle in the production process as the filtering medium for the filter device can still expand and contract after it has been folded.

As a result of diligent research into the way of folding the filtering medium so that the shape of the pleats in the filtering medium does not readily collapse, the present inventors have discovered that the pleats of the filtering medium do not readily deform, even when dust collects, if the conventional way of folding the filtering medium in a uniaxial direction is changed to a biaxial direction, and the invention has been completed by developing the Miura map fold (registered trade mark) technique for use on solid bodies. That is to say, the inventive filter device for a motor-vehicle air-conditioning system is provided with a filtering medium and a frame which is fitted to at least one part of the periphery of the filtering medium and holds the filtering medium, said filter device being characterized in that the abovementioned filtering medium has folds comprising a first group of lines in which zigzag mountain fold lines and valley fold lines are alternately repeated with spaces between them, and a second group of lines in which linear folds comprising alternately repeating mountain fold and valley fold sections are arranged parallel to one another; and the abovementioned folds intersect the abovementioned second group of lines at each apex of the zigzag shape of the abovementioned first group of lines, the mountain fold and valley fold sections of the abovementioned second group of lines alternate at the abovementioned point of intersection, and furthermore the mountain folds and valley folds alternate so that adjacent folds of the second group of lines which are split by each fold of the abovementioned first group of lines are opposing folds.

With the inventive filter device for a motor-vehicle air-conditioning system, the minor angle formed by the zigzag shape of the first group of lines is preferably 60 - 120°. The pleats of the filtering medium are together constrained by the bidirectional pleats extending from the bending points of the zigzag shape, and therefore this is very effective in restricting deformation of the shape of the pleats.

With the inventive filter device for a motor-vehicle air-conditioning system, the lines of the abovementioned second group of lines of the abovementioned filtering medium are preferably equally spaced apart. The shape of the filtering medium when it is folded becomes long and narrow, and it can be made compact in the same way as the pleat folds of a pleated shape.

With the inventive filter device for a motor-vehicle air-conditioning system, at least one part of the periphery of the abovementioned filtering medium where the abovementioned frame is not fitted is preferably surrounded by an elastic member. When the filter is mounted in or demounted from the motor-vehicle air-conditioning system, it is possible to prevent the filtering medium from becoming caught on components of the motor-vehicle air-conditioning system.

The motor-vehicle air-conditioning system according to the present invention is provided with at least air-blowing means and an air passage through which air generated by said air-blowing means passes, and it is characterized in that the inventive filter device for a motor-vehicle air-conditioning system is fitted in the air passage.

The present invention makes it possible to suppress the formation of regions where no filtering is applied, even when dust collects, in a motor-vehicle air-conditioning filter device, and this has the effect of making it possible to suppress increases in resistance to the passage of air over prolonged periods, and makes it possible to extend the time until the filter device is replaced. In addition, the filtering medium for the filter device can still expand and contract after it has been folded, and therefore it is easy to handle during the filter production process.

A mode of embodiment of the present invention will be described in detail below with reference to the figures. Furthermore, the present invention is not limited by the mode of embodiment given below.

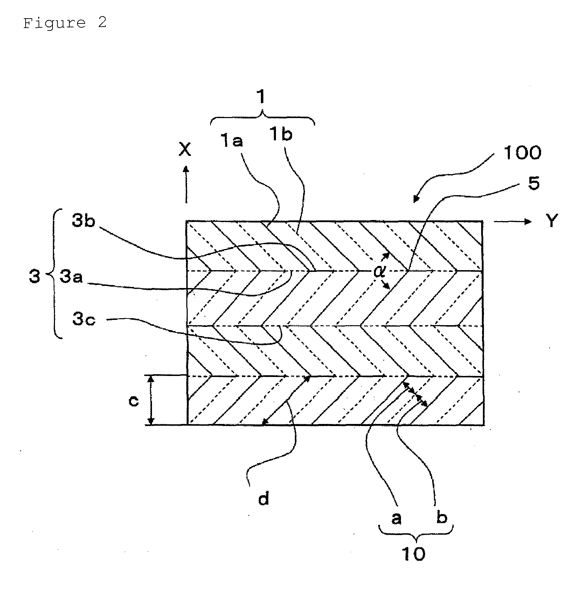

Figure 2 is an enlarged partial view in which the filtering medium is expanded over a plane surface, in order to show the way of folding the filtering medium of the filter device according to this mode of embodiment. In Figure 2, the solid lines denote mountain folds, and the broken lines denote valley folds. As shown in Figure 2, a filtering medium 100 has folds comprising a first group of lines 1, in which zigzag mountain fold lines 1a and valley fold lines 1b are alternately repeated in the Y direction with spaces a, b between them, and a second group of lines 3 in which linear folds running in the Y direction and comprising alternately repeating mountain fold 3a and valley fold 3b sections are arranged parallel to one another; and the second group of lines 3 is intersected at each apex of the zigzag shape of the first group of lines 1, the mountain fold 3a and valley fold 3b sections of the second group of lines 3 alternate at the point of intersection, and furthermore the mountain folds and valley folds alternate so that adjacent folds of the second group of lines which are split by each fold of the first group of lines are opposing folds. Figure 2 shows an exemplary relationship in which the valley folds 3b and mountain folds 3c of the second group of lines are split by 1a and 1b of the first group of lines.

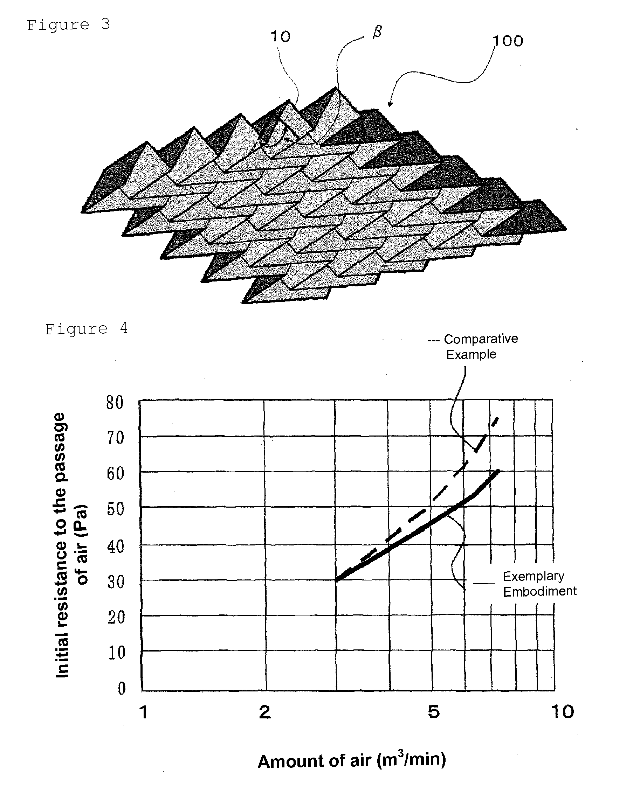

Figure 3 is an oblique schematic showing the external appearance after the filtering medium 100 has been bent into folds to form a solid shape, in accordance with the expanded view of the folds shown in Figure 2. As shown in Figure 3, zigzagging pleats have been formed, as a result of which bidirectional pleats are joined at the apexes of the zigzag shapes, and the pleats show increased resistance to localized deformation regardless of any stress from any direction. In addition, if stress is applied to the zigzagging pleats from the normal direction (the filtering direction), the pleats over the whole of the filtering medium spread out in a uniform manner, without any localized spreading of only those pleats which have been subjected to stress, and therefore there is unlikely to be localized deformation of the pleats. That is to say, as dust collects and the amount of dust adhering between the pleats increases, there is little localized deformation or disturbance of the pleats when there is a large amount of air, and it is possible to suppress the formation of regions where no filtering is applied. Accordingly, the whole surface of the filtering medium can be effectively used over a prolonged period, and it is possible to extend the period until the filter is replaced which is occasioned by increases in resistance to the passage of air through the filtering medium. Furthermore, the angle β formed between surfaces of the zigzagging pleats can easily expand or contract, and therefore the filtering medium can readily expand or contract without the shape of the pleats being disturbed. Consequently, the filtering medium is simple to handle during the process for producing the filter device.

This mode of embodiment of the filtering medium includes the case in which the spaces a, b between the first group of lines are equal, and the mountain folds and valley folds are alternately repeated with fixed spaces between them. It also includes the case in which the zigzag shape of the first group of lines is configured by a repetition of straight lines of the same length at a fixed angle. The filtering medium can be easily bent to form folds, which makes production simple, and the height of the pleats of the filtering medium is uniform, and therefore a shape can be achieved in which filtering media of the same surface area are bent to form folds in a compact manner.

With the filtering medium according to this mode of embodiment, the angle $\alpha$ which is the minor angle formed by the zigzag shape of the first group of lines shown in Figure 2 is preferably 60 - 120°. When the angle $\alpha$ is greater than 120°, the shape of the pleats of the filtering medium when it is bent into folds resembles the shape of conventional pleat folds which are parallel to one another extending in the X direction, and therefore the extent to which deformation of the shape of the pleats is suppressed is reduced, and it is difficult to suppress localized deformation of the shape of the pleats when dust collects. On the other hand, if the angle $\alpha$ is less than 60°, the shape of the pleats when the medium is bent into folds resembles the shape of conventional pleat folds which are parallel to one another and extend in the Y direction, and therefore it is likewise difficult to suppress localized deformation of the shape of the pleats. That is to say, provided that the minor angle $\alpha$ formed by the zigzag shape is between 60° and 120°, the pleats of the filtering medium are constrained by the bidirectional pleats extending from the bending point 5 of the zigzag shape, and therefore there is a significant effect in suppressing deformation of the shape of the pleats.

Furthermore, among the folds of the filtering medium 100, the second group of lines 3 which are parallel to one another and extend in the Y direction are preferably equally spaced. Once the filtering medium has been bent into folds, it can be folded into layers in a compact manner to make it long and narrow, which makes it readily able to deform in contraction without the shape of the pleats being disturbed in both the X direction and Y direction, and therefore it is simple to handle during the process of producing the filter device, and the filtering medium can absorb contraction without any irregular deformation of the pleats due to contraction of the outer frame of the filter.

The filtering medium 100 which forms the base material is filter paper having pulp as the raw material, or a non-woven fabric consisting of synthetic fibres such as polyethylene fibres, for example. Large dust particles are caught and trapped in the gaps between the constituent fibres of the filtering medium 100, and small particles such as pollen are trapped by the attractive forces between molecules which act between the particles and the fibres when the particles come into contact or collide with the fibres.

With the filter device according to this mode of embodiment, a frame (not depicted) for holding the filtering medium is fitted to the periphery of the filtering medium which has been bent into folds. This frame may be fitted around the whole periphery of the filtering medium, but it may also be fitted to a part of the filtering medium. For example, when the filter device is removed from the air-conditioning system, the periphery of the filtering medium is not completely enclosed by the frame if the filtering medium is temporarily compressed by the air-conditioning case or other components during attachment or removal.

At least a part of the periphery of the filtering medium to which the frame is not fitted is preferably surrounded by an elastic member. It is possible to prevent the projections of the pleats of the filtering medium from becoming caught on the air-conditioning case or other components during attachment or removal of the filter device, and it is possible to replace the filter device smoothly. The elastic member should be able to deform in accordance with the filtering medium when the filtering medium is compressed for attachment or removal, and it is an elastomer such as butyl rubber, for example.

When the filtering medium of the filter device according to this mode of embodiment is produced, the strip-like filtering medium extending in the Y direction in Figure 2 (Y is the length direction, X is the width direction) preferably undergoes a continuous folding process, and it is cut to a prescribed size to be assembled with the frame of the filter device. Before the filtering medium is folded into a solid shape and the ends are made straight, the zigzag shape of the first group of lines is reflected in the cut end (the cut is made in the X direction) which passes across the Y direction of the filtering medium, and the zigzag shape is cut therein. Following this, when the next filtering medium is cut, the off-cut pieces of filtering medium can be reduced (i.e. there are no unneeded pieces cut off) by repeatedly cutting the zigzag shape, and the yield of material can be increased. Furthermore, the ends of the filtering medium parallel to the Y direction (both ends of the strip-like filtering medium in the width direction) are straight, and therefore it is possible to divide the ends of the filtering medium parallel to the Y direction in accordance with the required width of filtering medium by making straight cuts, without any loss of material.

The motor-vehicle air-conditioning system according to this mode of embodiment is provided with at least air-blowing means and an air passage through which air generated by the air-blowing means passes, and the filter device according to this mode of embodiment is fitted in the air passage.

Figure 1 is a schematic of the motor-vehicle air-conditioning system showing the mounted state of the filter device of the motor-vehicle air-conditioning system;

Figure 2 is an enlarged partial view in which the filtering medium is expanded over a plane surface, in order to show an example of the way of folding the filtering medium of the filter device according to this mode of embodiment.

The solid lines inside the external frame denote mountain folds, the broken lines denote valley folds;

Figure 3 is an oblique schematic showing an example of the external appearance of the filtering medium of the filter device according to this mode of embodiment after it has been folded into a solid shape; and

Figure 4 is a graph to show the relationship between the initial resistance to the passage of air and the amount of air. The solid line denotes the exemplary embodiment, the broken line denotes the comparative example.

The motor-vehicle air-conditioning system according to this mode of embodiment is a system in which the filter device according to this mode of embodiment is fitted instead of the conventional filter device shown in Figure 1. A vehicle air-conditioning system 200 is provided with airflow generating means (a blower, for example) 20, a filter device 18 for a motor-vehicle air-conditioning system according to this mode of embodiment, an evaporator 17, and a heater core 62, in a case 25 which forms an air passage. Airflow 23 is produced in the air passage by actuating the airflow generating means 20. That is to say, air from outside the vehicle compartment or air from inside the vehicle compartment is taken into the air passage by switching an intake door (not depicted), and this airflow 22 is sucked into the blower 20. Next, the airflow 23 is ejected by the blower 20 to the filter device 18 for a motor-vehicle air-conditioning system according to this mode of embodiment and to the evaporator 17, and airflow 34 which has been cleaned and undergone heat exchange becomes airflow 35 or airflow 36, by switching an air-mix door 27. The airflow 35 is airflow produced during cold driving. On the other hand, the airflow 36 is heated by the heat core 62.

As an exemplary embodiment, the size of the filtering medium of the filter device was set at 200 x 200 x 9 mm, and the surface area of the filtering medium was set at 0.2 $m^2$; the way of folding the pleats of the filtering medium involved setting the angle $\alpha$ of the zigzags of the first group of lines at 90°, and the length d of the straight lines configuring the zigzag shapes was set at 18.5 mm; the spaces a, b were set at 10 mm, and after the filtering medium had been bent into folds, an outer peripheral frame was fitted thereto, and the filter device was produced. Moreover, the spaces c for the second group of lines were set equally at 13 mm. The angle $\beta$ formed by the mutually facing surfaces of the pleats after the filtering medium had been bent into folds (the corresponding angle $\beta$ is shown in Figure 3 after pleats have been folded in the direction shown by 10 in Figure 2) was 60°. Furthermore, a PET thermal-bond non-woven fabric with a basis weight of 80 $g/m^2$ was used as the filtering medium.

As a comparative example, the size of the filter was set at 200 x 200 x 10 mm, and the surface area of the filtering medium of the filter was set at 0.2 $m^2$; conventional pleat processing was used to fold the pleats. The pitch between apexes of the pleats was set at 4 mm, and 50-mountain pleats were provided, but other than this the filter device was produced in the same way as in the exemplary embodiment.

(Initial resistance to the passage of air)

A prescribed amount of air was filtered through filter devices of the exemplary embodiment and of the comparative example in an unused state, and the initial resistance to the passage of air was measured. As shown by the results in Figure 4, as the amount of air increases, the initial resistance to the passage of air tends to increase more in the comparative example than in the exemplary embodiment. In the comparative example, the shape of the pleats is disturbed as the amount of air increases, leading to increased non-uniformity, and there is pressure from adjacent pleats which leads to the formation of regions where no filtering is applied, and therefore resistance to the passage of air is increased. On the other hand, in the exemplary embodiment, there is little disturbance of the pleats, even with a large amount of air, and the formation of regions where no filtering is applied is suppressed, and therefore a value for resistance to the passage of air substantially corresponding to the amount of air is demonstrated.

(Resistance to the passage of air when dust is retained)

A prescribed amount of 15-type standard mixed dust (JIS 15-type) specified in JIS Z8901 "Test powders and test particles" was trapped in the filter devices of the exemplary embodiment and the comparative example, and resistance to the passage of air when dust is retained with an amount of air of 450 $m^3$/hour was measured based on ISO TS11-155-Part 1 "Test for Particulate Filtration". The results of the test for resistance to the passage of air when dust is retained are shown in Table 1. As shown in Table 1, the resistance to the passage of air is lower in the exemplary embodiment than in the comparative example when the same amount of dust is retained. In the comparative example, when the amount of dust retained increases, the shape of the pleats undergoes localized deformation due to the accumulation of dust, and pressure is applied by adjacent pleats, and therefore regions where no filtering is applied are formed, which means that the resistance to the passage of air increases, but no localized deformation of the pleats was seen in the exemplary embodiment even when the amount of dust retained increased. In other words, in the exemplary embodiment, the resistance to the passage of air when 12 g of dust were retained was 93 Pa, while in the comparative example, the resistance to the passage of air was 95 Pa when 6 g of dust were retained.

[Table 1]

| | Resistance to the passage of air when dust is retained (Pa) | |
|---|---|---|
| Amount of particles retained (g) | Exemplary Embodiment | Comparative Example |
| 0 | 60 | 75 |
| 6 | 75 | 95 |
| 12 | 93 | 151 |

(Estimate of time required for replacement of the filter of the filter device)

The environmental white paper of 2005 states that the average annual value at motor vehicle exhaust gas measurement stations for suspended particulate matter for 2003 was 0.033 mg/m$^3$. The safety factor for the amount of suspended particulate matter is twice this value, with the amount of dust in the atmosphere being estimated at 0.066 mg/m$^3$. The amount of filtered air from motor-vehicle air-conditioning systems is 200 m$^3$/hour in a steady state, and therefore assuming 400 hours of driving per year, the amount of dust collected over one year can be calculated using Equation 1. It should be noted that 400 hours of driving per year is the time spent driving when travelling 12 000 km per year at an average speed of 30 km/h, and this corresponds to motor vehicle manufacturers' recommended filter device replacement criterion of 12 000 km or one year.

$$\text{(Equation 1) } 0.066 \times 200 \times 400 = 5.28 \text{ g/year.}$$

It can be seen from Equation 1 that the amount of dust collected over one year with the conventional filter replacement criterion is approximately 6 g. In the comparative example, the results from Table 1 show resistance to the passage of air of 95 Pa with use for one year. If the filter is replaced with this resistance to the passage of air, 12 g of dust can be retained in the exemplary embodiment before the same resistance to the passage of air is reached, and therefore the time until the filter device needs to be replaced is two years in these hypothetical conditions, and the lifespan of the filter device can be doubled.

[Key to Symbols]

1, 1a, 1 b first group of lines
3, 3a, 3b, 3c second group of lines
5 bending point
10 transverse section lines of the pleats for obtaining the angle β formed by the surfaces of the pleats
α angle of the zigzag shape of the first group of lines
β angle formed by the surfaces of the pleats
a, b spaces between the first group of lines
c space between the second group of lines
d unit length of the zigzag shape of the first group of lines
17 evaporator
18 filter device
20 blower
22, 23, 34, 35, 36 airflow
25 case
27 air-mix door
62 heater core
100 filtering medium
200 motor-vehicle air-conditioning system
300 vehicle body

**Claims**

1. Filter device fitted in a motor-vehicle air-conditioning system, provided with a filtering medium and a frame which is fitted to at least one part of the periphery of said filtering medium and holds the filtering medium, said filter device being **characterized in that** the abovementioned filtering medium has folds comprising a first group of lines in which zigzag mountain fold lines and valley fold lines are alternately repeated with spaces between them, and a second group of lines in which linear folds comprising alternately repeating mountain fold and valley fold sections are arranged parallel to one another; and the abovementioned folds intersect the abovementioned second group of lines at each apex of the zigzag shape of the abovementioned first group of lines, the mountain fold and valley fold sections of the abovementioned second group of lines alternate at the abovementioned point of intersection, and furthermore the mountain folds and valley folds alternate so that adjacent folds of the second group of lines which are split by each fold of the abovementioned first group of lines are opposing folds.

2. Filter device according to Claim 1, **characterized in that** the minor angle formed by the zigzag shape of the abovementioned first group of lines is 60 - 120°.

3. Filter device according to Claim 1 or 2, **characterized in that** the lines of the abovementioned second group of lines are equally spaced apart.

4. Filter device according to Claim 1, 2 or 3, **characterized in that** at least one part of the periphery of the abovementioned filtering medium where the abovementioned frame is not fitted is surrounded by an elastic member.

5. Motor-vehicle air-conditioning system provided with at least air-blowing means and an air passage through which air generated by said air-blowing means passes, said motor-vehicle air-conditioning system being **characterized in that** the filter device according to Claim 1, 2, 3 or 4 is fitted in the abovementioned air passage.

Figure 1

Figure 2

Figure 3

Figure 4

Amount of air (m³/min)

Europäisches
Patentamt

European
Patent Office

Office européen
des brevets

**EUROPEAN SEARCH REPORT**

Application Number

EP 08 16 4743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2 862 624 A (ARTHUR STOKES EDWARD) 2 December 1958 (1958-12-02) | 1-4 | INV. B60H3/06 B01D46/52 |
| Y | * the whole document * | 5 | |
| A | DE 943 027 C (EBERSPAECHER J) 9 May 1956 (1956-05-09) * the whole document * | 1-5 | |
| Y | EP 0 623 377 A (MANN & HUMMEL FILTER [DE]) 9 November 1994 (1994-11-09) * the whole document * | 5 | |
| D,A | JP 10 015329 A (JAPAN VILENE CO LTD) 20 January 1998 (1998-01-20) * abstract * | 1-5 | |

| | | | TECHNICAL FIELDS SEARCHED (IPC) |
|---|---|---|---|
| | | | B01D B60H |

The present search report has been drawn up for all claims

| Place of search | Date of completion of the search | Examiner |
|---|---|---|
| Munich | 8 January 2009 | Chavel, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 16 4743

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2009

| Patent document cited in search report | | Publication date | Patent family member(s) | | Publication date |
|---|---|---|---|---|---|
| US 2862624 | A | 02-12-1958 | NONE | | |
| DE 943027 | C | 09-05-1956 | NONE | | |
| EP 0623377 | A | 09-11-1994 | AT | 175889 T | 15-02-1999 |
| | | | ES | 2129533 T3 | 16-06-1999 |
| JP 10015329 | A | 20-01-1998 | JP | 3569770 B2 | 29-09-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1015329 B
- JP H2301426 B
- JP S5625023 B